# EUROPÄISCHE PATENTSCHRIFT

(11) **EP 0 599 170 B1**
(45) Veröffentlichungstag und Bekanntmachung des Hinweises auf die Patenterteilung: **15.05.1996**
(21) Anmeldenummer: 93118434.5
(22) Anmeldetag: 15.11.1993
(51) Int. Cl.: F25B 41/00, F25B 43/02

(54) **Kältemittelkreislauf**
Refrigerant circuit
Circuit de réfrigérant

(30) Priorität: 21.11.1992 DE 4239197
(43) Veröffentlichungstag der Anmeldung: 01.06.1994
(73) Patentinhaber: ABB PATENT GmbH, D-68309 Mannheim (DE)
(72) Erfinder: Nestler, Dietrich, D-68163 Mannheim (DE)
(74) Vertreter: Rupprecht, Klaus, Dipl.-Ing.

(56) Entgegenhaltungen:
- US-A- 3 978 685
- US-A- 4 551 990
- US-A- 4 715 196
- US-A- 4 773 229
- CUBE "LEHRBUCH DER KÄLTE-TECHNIK", 3. Auflage, Band 1, 1981, C.F. MÜLLER Karlsruhe, Seiten 487-490

## Beschreibung

Die Erfindung bezieht sich auf einen Kältemittelkreislauf gemäß dem Oberbegriff des Anspruchs 1.

Bei einem Kältemittelkreislauf ist es von Wichtigkeit, daß das zur Schmierung des Verdichers erforderliche und vom Kältemittel in den Kältemittelkreislauf transportierte Öl wieder zum Verdichter zurückbefördert wird. Diese ölrückführung im Kältemittelkreislauf ist bei ebenen Saugleitungen und bei Saugleitungen mit Gefälle vom Verdampfer zum Verdichter (fallende Saugleitungen) kein Problem. Bei genügend hoher Sauggasgeschwindigkeit ist die Ölrückführung auch bei steigender Saugleitung, d. h. bei einer Saugleitung mit Gefälle vom Verdichter zum Verdampfer, gewährleistet.

Bei Kälteanlagen mit leistungsgeregelten Verdichtern ist es aus Cube, Lehrbuch der Kältetechnik Band 1, Verlag C.F. Müller, Karlsruhe, 1975, S. 448 bis 451 bekannt, die Saugleitung an senkrecht verlaufenden Strecken in zwei Stränge unterschiedlichen Durchmessers (Hauptsaugleitung und Bypaß) aufzuteilen. Fällt beim Betrieb des Verdichters mit stark verminderter Leistung und aufgrund der hierdurch verminderten Sauggasgeschwindigkeit die Ölrückführung durch die Hauptsaugleitung zum Verdichter aus, so sammelt sich Öl in einem unteren Bogen der Hauptsaugleitung. Der Kältemitteldampf wird somit über den Bypaß engeren Querschnitts abgesaugt. Die Querschnittsfläche des Bypasses ist dabei derart bemessen, daß die Ölrückführung beim kleinsten Ansaugvolumen des Verdichters, d. h. minimaler Verdichterleistung, in Folge genügend hoher Sauggasgeschwindigkeit noch gewährleistet ist.

Dieser Bypaßbetrieb kann jedoch in einer Übergangsphase (mittlere Verdichterleistung) zwischen dem Betrieb über den Bypaß und dem Betrieb über die Hauptsaugleitung zum "Pumpen" der Ölsäule in der Hauptsaugleitung führen. In dieser Übergangsphase kann der Bypaß den Sauggasstrom nicht mehr allein aufnehmen, jedoch ist in der Hauptsaugleitung die Sauggasgeschwindigkeit noch zu gering, um die im Bogen angesammelte Ölsäule in der senkrechten Hauptsaugleitung vollständig nach oben zu fördern. Das Öl wird vom Sauggasstrom teilweise nach oben transportiert, fällt anschließend größtenteils wieder nach unten, sammelt sich erneut im Bogen, wird wiederum nach oben transportiert usw.. Dieser Pumpbetrieb ist erst dann beendet, wenn die Sauggasgeschwindigkeit in der senkrechten Hauptsaugleitung einen Mindestwert überschreitet, wodurch das gesamte im Bogen befindliche Öl zum Verdichter gefördert wird.

Der Pumpbetrieb verursacht in nachteiliger Weise Geräuschemissionen, die gegebenenfalls bei stationären industriellen Kälteanlagen noch hingenommen werden können, die jedoch bei Kälteanlagen auf Fahrzeugen sehr störend sind.

Das Problem der Ölrückführung verschärft sich zudem bei Kälteanlagen mit Schraubenverdichtern, da diese Verdichter bei Versorgung über einen Stromrichter mit variabler Spannung und Frequenz quasi eine stufenlose Leistungsregelung zwischen 0 und 100 % ermöglichen. In Folge der bei diesen Anlagen auf sehr geringe Werte einstellbaren Verdichterleistung ist die Querschnittsfläche des Bypasses entsprechend gering zu bemessen, um auch bei sehr kleinen Verdichterleistungen noch eine genügend hohe Sauggasgeschwindigkeit und damit eine Ölrückführung zu gewährleisten. Die Übergangsphase zwischen dem Betrieb über den Bypaß und dem Betrieb über die Hauptsaugleitung betrifft somit einen weiten Betriebsbereich, wodurch die störenden Geräuschemissionen in Folge des Pumpens der Ölsäule in weiten Betriebsbereichen auftreten.

Der Erfindung liegt die Aufgabe zugrunde, einen Kältemittelkreislauf der eingangs genannten Art anzugeben, bei dem in allen Betriebsbereichen und insbesondere bei unterschiedlichen Verdichterleistungen eine möglichst geräuscharme Ölrückführung des im Kältemitteldampf befindlichen Öls zum Verdichter gewährleistet ist.

Diese Aufgabe wird in Verbindung mit den Merkmalen des Oberbegriffes erfindungsgemäß durch die im Kennzeichen des Anspruchs angegebenen Merkmale gelöst.

Die mit der Erfindung erzielbaren Vorteile bestehen insbesondere darin, daß durch die Aufteilung der Saugleitung auf mehrere Teilleitungen bei allen Verdichterleistungen, insbesondere auch bei kleinen und kleinsten Verdichterleistungen von Schraubenverdichtern, selbsttätig eine zur Ölrückführung ausreichend hohe Sauggasgeschwindigkeit in zumindest einer Teilleitung erzielt wird. Geräuschemissionen durch in den Teilleitungen pumpende Ölsäulen werden hierdurch weitgehend vermieden. Die Kälteanlage arbeitet umso geräuscharmer, je mehr Teilleitungen zur Unterteilung der Saugleistung vorgesehen sind, d. h. je feinstufiger die Anpassung an unterschiedliche Verdichterleistungen erfolgt.

Auf der anderen Seite wird die Sauggasgeschwindigkeit auch nicht über den für die Ölrückführung erforderlichen Wert hinaus erhöht, wodurch der Wirkungsgrad der Kälteanlage optimiert wird.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert.

Es zeigen:
- Figur 1: eine Kälteanlage eines Fahrzeuges mit steigender Saugleitung,
- Figur 2: Einzelheiten der Saugleitung,
- Figur 3: eine alternativ ausgestaltete Teilleitung der Saugleitung,
- Figuren 4 bis 6: Ausführungsvarianten des Verteilers und der Teilleitungen.

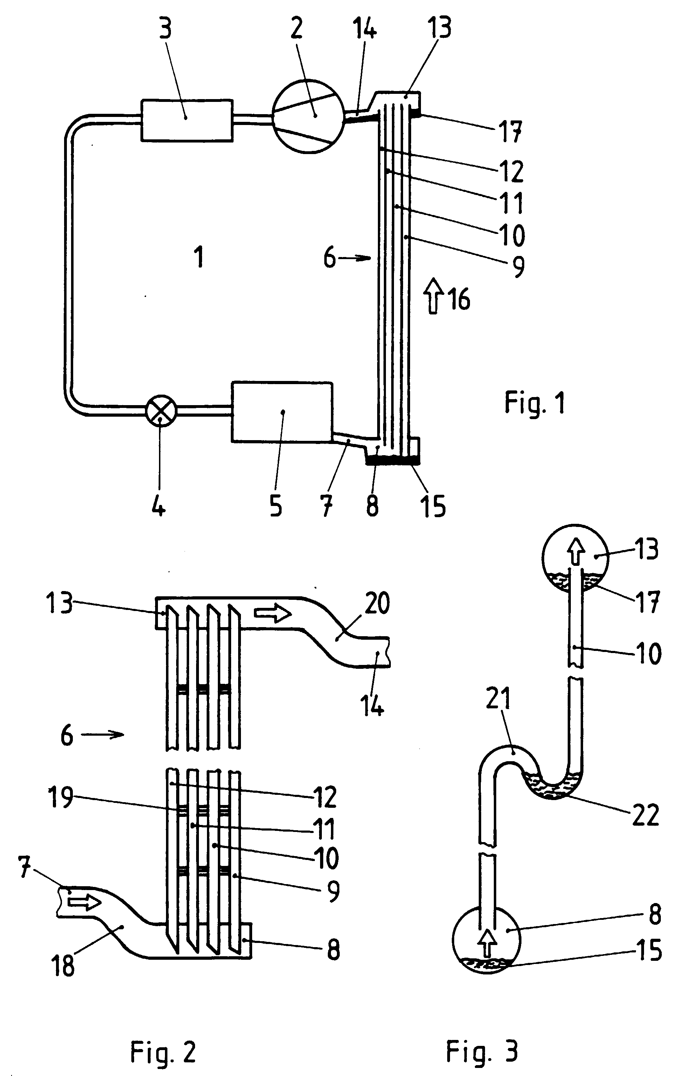

In Figur 1 ist eine Kälteanlage eines Fahrzeuges mit steigender Saugleitung dargestellt. Die Kälteanlage 1 weist einen Verdichter 2, insbesondere einen in der Leistung stufenlos von 0 bis 100 % regelbaren Schraubenverdichter, einen Verflüssiger 3, ein Expansionsventil 4, einen Verdampfer 5 und eine Saugleitung 6 zwischen Verdampfer 5 und Verdichter 2 auf. Verdichter 2/Verflüssiger 3 sind auf dem Wagendach des Fahrzeuges montiert, während das Luftbehandlungsgerät mit dem Verdampfer 5 auf dem Wagenboden befestigt ist.

Die Saugleitung 6 ist speziell ausgebildet und besteht aus einem kurzen Saugleitungsabschnitt 7 zwischen dem Verdampfer 5 und einem Verteiler 8, dem Verteiler 8 selbst, einem Sammler 13, mehreren Teilleitungen 9, 10, 11, 12 zwischen Verteiler 8 und Sammler 13 und einem kurzen Saugleitungsabschnitt 14 zwischen dem Sammler 13 und dem Verdichter 2. Der Saugleitungsabschnitt 7 weist dabei ein Gefälle vom Verdampfer 5 zum Verteiler 8 auf, so daß Öl vom Verdampfer 5 zum Boden des Verteilers 8 fließen und sich dort sammeln kann (siehe Öl 15 im Verteiler 8). Der Saugleitungsabschnitt 14 weist ein Gefälle vom Sammler 13 zum Verdichter 2 auf, so daß das im Kältemitteldampf 16 durch die Teilleitungen 9 bis 12 transportierte, sich am Boden des Sammlers 13 ablagernde Öl 17 zum Verdichter 2 hin fließen kann.

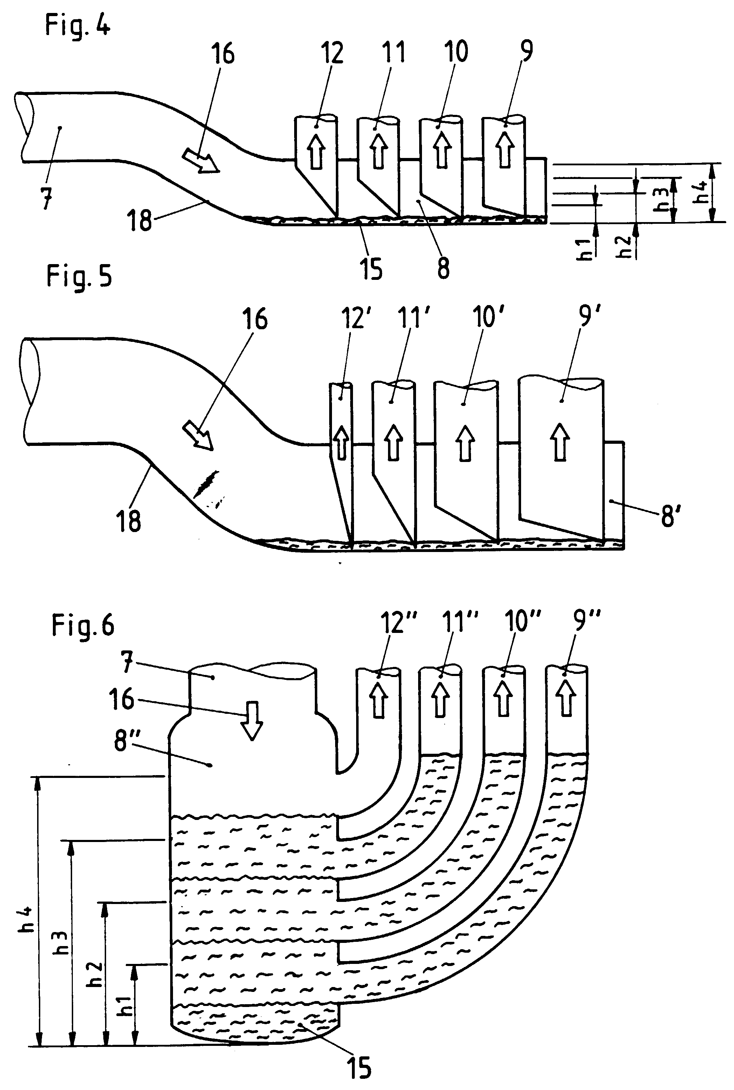

Die Summe der Querschnittsflächen aller Teilleitungen 9 bis 12 entspricht der Querschnittsfläche des Saugleitungsabschnitts 7 sowie der Querschnittsfläche des Saugleitungsabschnitts 14, d. h. die Gesamtquerschnittsfläche der Saugleitung ist auf mehrere Teilquerschnittsflächen aufgeteilt. Je nach Verdichterleistung sind einzelne Teilleitungen 9 bis 12 geöffnet oder geschlossen. Beim Ausführungsbeispiel mit vier Teilleitungen ist bei einer Verdichterleistung im Bereich 0 bis 25 % lediglich die Teilleitung 12 geöffnet, während die Teilleitungen 9 bis 11 geschlossen sind. Im Bereich 25 bis 50 % Verdichterleistung sind die beiden Teilleitungen 11, 12 geöffnet, während die Teilleitungen 9, 10 geschlossen sind. Im Bereich 50 bis 75 % Verdichterleistung sind die drei Teilleitungen 10 bis 12 geöffnet, während die Teilleitung 9 geschlossen ist. Im Bereich 75 bis 100 % Verdichterleistung sind schließlich alle vier Teilleitungen 9 bis 12 geöffnet. Bei den vorstehenden Zahlenangaben wird von Teilleitungen 9 bis 12 mit jeweils gleicher Querschnittsfläche ausgegangen. Bei jeweils unterschiedlichen Querschnittsflächen der einzelnen Teilleitungen 9 bis 12 (sh. Figur 5) ergibt sich eine entsprechend andere Staffelung der Ein-/Aus-Phasen der einzelnen Teilleitungen.

Durch die Anpassung der für den Kältemitteldampf 16 wirksamen Querschnittsfläche der Saugleitung an unterschiedliche Verdichterleistungen wird stets gewährleistet, daß die in der Saugleitung 6 herrschende Sauggasgeschwindigkeit bei allen Verdichterleistungen genügend hoch ist, um die Ölrückführung auch bei verringertem Ansaugvolumen des Verdichters sicherzustellen. Die Anpassung der wirksamen Querschnittsfläche an die Verdichterleistung gelingt umso besser, je mehr Teilleitungen vorgesehen sind. Wenn die Teilleitungen jeweils unterschiedliche Querschnittsflächen aufweisen, ist insbesondere bei kleinen Verdichterleistungen eine genauere Anpassung der wirksamen Querschnittsfläche der Saugleitung 6 an die aktuelle Verdichterleistung möglich, als dies bei Teilleitungen mit jeweils gleicher Querschnittsfläche der Fall ist.

Um die einzelnen Teilleitungen in Abhängigkeit der Verdichterleistung zu öffnen oder zu schließen, wäre es beispielsweise möglich, die einzelnen Teilleitungen über Magnetventile zu öffnen und zu schließen, wobei die Ansteuerung der Magnetventile in Abhängigkeit der Verdichterleistung erfolgen würde. Der dabei entstehende zusätzliche Steuerungs- und Bauteileaufwand ist jedoch nachteilig. Eine selbsttätige Öffnung/Schließung der Teilleitungen ist möglich, wenn das sich im Verteiler 8 bei zu geringer Sauggasgeschwindigkeit ansammelnde Öl 15 hierzu verwendet wird.

Dazu ist es notwendig, daß der Abstand der Öffnungen der Teilleitungen 9 bis 12 vom Boden des Verteilers 8 unterschiedlich ist. Wie bereits in Figur 1 angedeutet ist, vergrößern sich die Abstände der Öffnungen der Teilleitungen 9 bis 12 vom Verteilerboden, d. h. der Abstand h4 der Öffnung der Teilleitung 12 vom Verdichterboden ist größer als der Abstand h3 der Öffnung der Teilleitung 11 vom Verteilerboden usw. (siehe hierzu Abstände h1 ... h4 gemäß Figur 4). Diese unterschiedlichen Abstände der Öffnungen der Teilleitungen vom Verteilerboden haben die Wirkung, daß die einzelnen Teilleitungen durch unterschiedliche Ölstände im Verteiler 8 geschlossen werden, d. h. die Teilleitung 9 wird bereits bei einem geringeren Ölstand geschlossen als die Teilleitung 10 usw. Der Ölstand im Verteiler 8 steigt an, wenn die in einer Teilleitung herrschende Sauggasgeschwindigkeit zu gering ist, um das im Kältemitteldampf 16 befindliche Öl vollständig zum Sammler 13 zurückzuführen. Dann schlägt sich Öl an der Innenwandung dieser Teilleitung nieder und läuft zurück zum Verteiler 8. Bei genügend hohem Ölstand im Verteiler wird die Teilleitung geschlossen, deren Öffnung in das Öl 15 ragt. Folglich verringert sich die wirksame Querschnittsfläche der Saugleitung 6, wodurch sich die Sauggasgeschwindigkeit in den noch geöffneten Teilleitungen erhöht.

Es ergibt sich quasi eine selbsttätige Einstellung eines stabilen, bezüglich des Wirkungsgrades optimalen Arbeitspunktes in Abhängigkeit der Verdichterleistung, wobei die wirksame Querschnittsfläche der Saugleitung durch Öffnen oder Schließen einzelner Teilleitungen derart an das Ansaugvolumen des Verdichters angepaßt wird, daß die Sauggasgeschwindigkeit stets den zur Ölrückführung notwendigen Wert erreicht.

Bei einer Sauggasgeschwindigkeit, bei der das im Kältemitteldampft befindliche Öl vollständig zum Verdichter 2 rückgeführt wird, ist der stabile Arbeitspunkt erreicht. Wird jetzt die Verdichterleistung beispielsweise erhöht, vergrößert sich hierdurch die Sauggasgeschwindigkeit und es wird zusätzliches Öl 15 aus dem Verteiler 8 zum Verdichter 2 transportiert. Der Ölstand im Verteiler sinkt folglich, bis die Öffnung einer weiteren Teilleitung geöffnet wird, wodurch sich die wirksame Querschnittsfläche der Saugleitung vergrößert und hierdurch die Sauggasgeschwindigkeit herabgesetzt wird. Wie leicht zu erkennen ist, stellt sich einerseits in Abhängigkeit der Verdichterleistung selbsttätig stets eine genügend hohe Sauggasgeschwindigkeit ein, um die Ölrückführung zum Verdichter sicherzustellen, andererseits wird die wirksame Querschnittsfläche der Saugleitung 6 auch nicht unnötig verkleinert, was zwar hohe Sauggasgeschwindigkeiten, jedoch einen verschlechterten Wirkungsgrad der Kälteanlage zur Folge hätte.

In Figur 2 sind Einzelheiten der Saugleitung dargestellt. Wie zu erkennen ist, können die Gefälle zwischen dem Verdampfer 5 und dem Verteiler 8 bzw. zwischen dem Sammler 13 und dem Verdichter 2 durch entsprechende Bögen 18 bzw. 20 in den Saugleitungsabschnitten 7 bzw. 14 realisiert werden. Die einzelnen Teilleitungen 9 bis 12 sind durch mehrere Verbindungsteile 19 zusätzlich mechanisch miteinander verbunden, um eine stabile, schwingungsarme Ausbildung der Saugleitung 6 zu erzielen. Die Teilleitungen 9 bis 12 münden derart im Sammler 13, daß das über eine Teilleitung im Kältemitteldampf 16 transportierte Öl zum Boden des Sammlers und von diesem zum Verdichter 2 fließt, jedoch keinesfalls in einer anderen Teilleitung zum Verteiler 8 zurückgelangen kann.

In Figur 3 ist eine alternativ ausgestaltete Teilleitung der Saugleitung dargestellt. Wie zu erkennen ist, weist die Teilleitung 10 etwa auf halbem Wege zwischen Verteiler 8 und Sammler 13 einen Doppelbogen 21 auf, in dem sich Öl 22 ansammeln kann. Die weiteren Teilleitungen der Saugleitung sind in gleicher Weise ausgebildet. Die Doppelbögen stellen Zwischendepots für das Öl auf seinem Weg vom Verteiler 8 zum Sammler 13 dar und erleichtern den Transport des Öls in den Phasen, während der eine Teilleitung vom geschlossenen zum offenen Zustand wechselt. Bedarfsweise können die Teilleitungen jeweils auch mit mehreren, in gleichen Abständen verteilten Doppelbögen versehen sein.

Anstelle der Doppelbögen können alternativ auch andere Reservoirs zur Sammlung von Öl verwendet werden.

In den Figuren 4 bis 6 sind Ausführungsvarianten des Verteilers und der Teilleitungen dargestellt. Wie in Figur 4 zu erkennen ist, durchstoßen die Teilleitungen 9 bis 12 die Oberseite des liegenden, rohrförmigen Verteilers 8. Die Öffnungen der Teilleitungen 9 bis 12 sind mit unterschiedlichen Winkelschnitten versehen. Auf diese Weise ergeben sich unterschiedliche Abstände h1, h2, h3, h4 der Öffnungen der Teilleitungen 9, 10, 11, 12 vom Boden des Verteilers 8, wobei die "spitzen Enden" der Teilleitungen jeweils bis zum Boden des Verteilers 8 reichen. Weist der Ölstand die Höhe eines Abstandes h1 bzw. h2 bzw. h3 auf, so wird die entsprechende Teilleitung 9 bzw. 10 bzw. 11 geschlossen. Durch die Winkelschnitte der Teilleitungen mit in das Öl 15 eintauchenden "spitzen Enden" ist der Rücktransport von Öl 15 aus dem Verteiler 8 zum Verdichter 2 erleichtert, da das Öl die Innenwandungen der Teilleitungen benetzt und bei genügend hoher Sauggasgeschwindigkeit vom Sauggasstrom "mitgerissen" wird.

In Figur 5 sind Teilleitungen 9',10',11',12' mit jeweils unterschiedlichen Querschnittsflächen dargestellt, wobei auch die Teilleitungen 9' bis 12' mit den unter Figur 4 erwähnten unterschiedlichen Winkelschnitten versehen sind. Der Verteiler 8' entspricht im übrigen dem Verteiler 8 gemäß Figur 4. Die Querschnittsflächen der Teilleitungen 9' bis 12' verhalten sich beispielsweise entsprechend 1: 4: 9: 16. Bei einer aus Teilleitungen unterschiedlicher Querschnittsfläche zusammengesetzten Saugleitung ergibt sich insbesondere bei sehr geringen Verdichterleistungen, wie sie mit Schraubenverdichtern erzielbar sind, eine feinstufige Anpassung an das Verdichter-Ansaugvolumen durch die sich in Abhängigkeit der Ölstände im Verteiler 8' öffnenden oder schließenden Teilleitungen.

In Figur 6 ist eine Variante einer Saugleitung gezeigt, bei der die Teilleitungen 9'', 10'', 11'', 12'' die Seitenwandung des stehenden, topfförmigen Verteilers 8'' durchstoßen. Der Abstand der Öffnungen der Teilleitungen 9'' bis 12'' vom Boden des Verteilers 8'' entspricht wiederum h1 bzw. h2 bzw. h3 bzw. h4. Die unterschiedlichen möglichen Ölstände sind angedeutet, wobei gezeigt ist, daß der Ölstand in einer durch Öl geschlossenen Teilleitung aufgrund der auf die Ölsäule wirkenden Saugkraft des Verdichters höher ist als im Verteiler 8'' selbst. Die Teilleitungen 9'' bis 12'' können auch jeweils unterschiedliche Querschnittsflächen aufweisen.

Bei den vorstehend erläuterten Ausführungsbeispielen wird stets davon ausgegangen, daß der Verteiler 8, 8', 8'' über einen relativ kurzen Saugleitungsabschnitt 7 mit dem Verdampfer 5 und der Sammler 13 über einen relativ kurzen Saugleitungsabschnitt 14 mit dem Verdichter 2 verbunden sind. Es ist jedoch je nach konkreter Kälteanlage möglich, einen oder beide Saugleitungsabschnitte als längere Rohrleitungen auszuführen, wobei jedoch stets die Rückflußmöglichkeit des Öls 17 vom Sammler 13 zum Verdichter 2 gegeben sein sollte. Ferner ist es auch möglich, auf einen oder beide Saugleitungsabschnitte zu verzichten und den Verteiler 8, 8', 8'' über einen Anschlußflansch direkt an den Verdampfer 5 bzw. den Sammler 13 über einen Anschlußflansch direkt an den Verdichter 2 zu montieren.

## Patentansprüche

1. Kältemittelkreislauf mit Verdichter (2), Verflüssiger (3), Expansionsventil (4) und Verdampfer (5), wobei die Saugleitung (6) ein Gefälle vom Verdichter zum Verdampfer aufweist, dadurch gekennzeichnet,
- daß die Saugleitung (6) einen Verteiler (8, 8', 8'') und einen Sammler (13) aufweist,
- daß der Verteiler (8, 8', 8'') über mindestens drei Teilleitungen (9 bis 12, 9' bis 12', 9'' bis 12'') mit dem Sammler (13) verbunden ist, wobei die Summe der Querschnittsflächen der Teilleitungen der Querschnittsfläche der Saugleitungsabschnitte (14) oder Anschlußflansche vom Verdampfer (5) zum Verteiler und vom Sammler (13) zum Verdichter (2) entspricht
- und daß die einzelnen Teilleitungen durch den sich in Abhängigkeit der Verdichterleistung verändernden Ölstand im Verteiler (8, 8', 8'') derart geöffnet oder geschlossen werden, daß bei minimaler Verdichterleistung lediglich eine einzige Teilleitung (12, 12', 12'') offen ist, bei maximaler Verdichterleistung alle Teilleitungen offen sind und bei einer Verdichterleistung zwischen minimaler und maximaler Leistung mindestens eine Teilleitung (9, 9', 9'') geschlossen und mindestens zwei Teilleitungen (11, 11', 11'', 12, 12', 12'') geöffnet sind.

2. Kältemittelkreislauf nach Anspruch 1, gekennzeichnet durch eine derartige Ausbildung des Sammlers (13) oder des Saugleitungsabschnittes (14) vom Sammler zum Verdichter (2), daß das im Sammler befindliche Öl (17) zum Verdichter hin fließt.

3. Kältemittelanlage nach Anspruch 1 und/oder 2, gekennzeichnet durch eine derartige Ausbildung des Verteilers (8, 8', 8'') oder des Saugleitungsabschnittes (7) vom Verdampfer (5) zum Verteiler, daß das Öl vom Verdampfer zum Verteiler fließt.

4. Kältemittelkreislauf nach einem der Ansprüche 1 bis 3, dadurch gekennzeichnet, daß die bei minimaler Verdichterleistung noch offene Teilleitung (12') die geringste Querschnittfläche aller Teilleitungen aufweist, daß die bei hoher Verdichterleistung zuletzt öffnende Teilleitung (9') die größte Querschnittsfläche aller Teilleitungen aufweist und daß die weiteren Teilleitungen (10', 11') entsprechend abgestufte Querschnittsflächen aufweisen.

5. Kältemittelkreislauf nach einem der Ansprüche 1 bis 4, gekennzeichnet durch einen rohrförmigen liegenden Verteiler (8, 8'), dessen Oberseite von den Teilleitungen (9 bis 12, 9' bis 12') durchstoßen wird, wobei die Öffnungen der Teilleitungen unterschiedliche Abstände (h1 bis h4) zum Boden des Verteilers hin aufweisen.

6. Kältemittelkreislauf nach einem der Ansprüche 1 bis 4, gekennzeichnet durch einen stehenden, topfförmigen Verteiler (8''), dessen Seitenfläche von den Teilleitungen (9'' bis 12'') durchstoßen wird, wobei die Öffnungen der Teilleitungen unterschiedliche Abstände (h1 bis h4) zum Boden des Verteilers hin aufweisen.

7. Kältemittelkreislauf nach einem der Ansprüche 1 bis 6, dadurch gekennzeichnet, daß die Teilleitungen (9 bis 12, 9' bis 12', 9'' bis 12'') jeweils mit mindestens einem zur Sammlung von Öl (22) geeigneten Reservoir, insbesondere einem Doppelbogen (21) versehen sind.

## Claims

1. Refrigerant circuit with a compressor (2), condenser (3), expansion valve (4) and evaporator (5), the suction line (6) having a descending gradient from the compressor to the evaporator, characterized in that
- the suction line (6) has a distributor (8, 8', 8") and a header (13),
- the distributor (8, 8', 8") is connected to the header (13) via at least three part lines (9 to 12, 9' to 12', 9" to 12"), the sum of the cross-sectional areas of the part lines corresponding to the cross-sectional area of the suction-line portions (14) or connecting flanges from the evaporator (5) to the distributor and from the header (13) to the compressor (2),
- and the individual part lines are opened or closed as a result of the oil level in the distributor (8, 8', 8"), the said oil level varying as a function of the compressor power, in such a way that, in the case of minimum compressor power, only a single part line (12, 12', 12") is open, in the case of maximum compressor power all the part lines are open, and in the case of a compressor power between minimum and maximum power at least one part line (9, 9', 9") is closed and at least two part lines (11, 11', 11", 12, 12', 12") are opened.

2. Refrigerant circuit according to Claim 1, characterized by a design of the header (13) or of the suction-line portion (14) from the header to the compressor (2) such that the oil (17) located in the header flows towards the compressor.

3. Refrigerant system according to Claim 1 and/or 2, characterized by a design of the distributor (8, 8', 8") or of the suction-line portion (7) from the evaporator (5) to the distributor such that the oil flows from the evaporator to the distributor.

4. Refrigerant circuit according to one of Claims 1 to 3, characterized in that the part line (12') still open in the case of minimum compressor power has the smallest cross-sectional area of all the part lines, in that the part line (9') opening last in the case of a high compressor power has the largest cross-sectional area of all the part lines, and in that the further part lines (10', 11') have correspondingly graded cross-sectional areas.

5. Refrigerant circuit according to one of Claims 1 to 4, characterized by a tubular horizontal distributor (8, 8'), the top side of which is pierced by the part lines (9 to 12, 9' to 12'), the orifices of the part lines being at different distances (h1 to h4) from the bottom of the distributor.

6. Refrigerant circuit according to one of Claims 1 to 4, characterized by a vertical pot-shaped distributor (8"), the side face of which is pierced by the part lines (9" to 12"), the orifices of the part lines being at different distances (h1 to h4) from the bottom of the distributor.

7. Refrigerant circuit according to one of Claims 1 to 6, characterized in that the part lines (9 to 12, 9' to 12', 9" to 12") are provided in each case with at least one reservoir, in particular a double bend (21), suitable for the collection of oil (22).

## Revendications

1. Circuit de frigorigène comprenant un compresseur (2), un condenseur (3), une valve d'expansion (4) et un évaporateur (5), la conduite d'aspiration (6) présentant une pente descendante depuis le compresseur vers l'évaporateur, **caractérisé par le fait**
- que la conduite d'aspiration (6) présente un distributeur (8, 8', 8") et un collecteur (13),
- que le distributeur (8, 8', 8") est relié par au moins trois conduites partielles (9 à 12, 9' à 12', 9" à 12") au collecteur (13), la somme des sections des conduites partielles correspondant à la section des tronçons de conduite d'aspiration (7, 14) ou brides de raccordement entre l'évaporateur (5) et le distributeur et entre le collecteur (13) et le compresseur (2), et
- que les différentes conduites partielles sont ouvertes ou fermées par le niveau d'huile dans le distributeur (8, 8', 8"), variable en fonction de la puissance du compresseur, de telle manière qu'une seule conduite partielle (12, 12', 12") soit ouverte pour une puissance minimale du compresseur, que toutes les conduites partielles soient ouvertes pour la puissance maximale du compresseur et qu'au moins une conduite partielle (9, 9', 9") soit fermée et au moins deux conduites partielles (11, 11', 11", 12, 12', 12") soient ouvertes pour une puissance du compresseur comprise entre la puissance minimale et la puissance maximale.

2. Circuit de frigorigène suivant la revendication 1, **caractérisé** par une réalisation telle du collecteur (13) ou du tronçon de conduite d'aspiration (14) allant du collecteur vers le compresseur (2) que l'huile (17) se trouvant dans le collecteur s'écoule vers le compresseur.

3. Circuit de frigorigène suivant la revendication 1 et/ou 2, **caractérisé** par une réalisation telle du distributeur (8, 8', 8") ou du tronçon de conduite d'aspiration (7) allant de l'évaporateur (5) au distributeur que l'huile s'écoule de l'évaporateur vers le distributeur.

4. Circuit de frigorigène suivant l'une des revendications 1 à 3, **caractérisé** par le fait que la conduite partielle (12) encore ouverte pour la puissance minimale du compresseur présente la plus faible section de toutes les conduites partielles, que la conduite partielle (9') qui s'ouvre en dernier lieu pour une puissance élevée du compresseur présente la plus grande section parmi toutes les conduites partielles et que les autres conduites partielles (10', 11') présentent des sections échelonnées de façon correspondante.

5. Circuit de frigorigène suivant l'une des revendications 1 à 4, **caractérisé** par un distributeur (8, 8') tubulaire horizontal dont le côté supérieur est traversé par les conduites partielles (9 à 12, 9' à 12'), les orifices des conduites partielles présentant des distances différentes (hl à h4) par rapport au fond du distributeur.

6. Circuit de frigorigène suivant l'une des revendications 1 à 4, **caractérisé** par un distributeur (8") en forme de pot, vertical, dont la surface latérale est traversée par les conduites partielles (9" à 12"), les orifices des conduites partielles présentant des distances différentes (h1 à h4) par rapport au fond du distributeur.

7. Circuit de frigorigène suivant l'une des revendications 1 à 6, **caractérisé** par le fait que les conduites partielles (9 à 12, 9' à 12', 9" à 12") comportent chacune au moins un réservoir permettant une accumulation d'huile (22), en particulier un coude double (21).
